# EUROPÄISCHE PATENTANMELDUNG

(11) **EP 0 867 741 A2**
(43) Veröffentlichungstag der Anmeldung: **30.09.1998**
(21) Anmeldenummer: 98400512.4
(22) Anmeldetag: 03.03.1998
(51) Int. Cl.: G02B 6/44

(54) **Optisches Element oder optisches Kabel und Verfahren zu dessen Herstellung**

(30) Priorität: 29.03.1997 DE 19713306
(71) Anmelder: ALCATEL ALSTHOM COMPAGNIE GENERALE D'ELECTRICITE, 75008 Paris (FR)
(72) Erfinder: Nothofer, Klaus, 40699 Erkrath (DE)
(74) Vertreter: Mende, Dirk

(57) **Zusammenfassung**

Ein optisches Element (1) hat zumindest eine in einer rohrförmigen Hülle (5) verlaufende optische Faser (3), wobei die rohrförmige Hülle (5) aus einem längslaufenden und mit überlappenden Bandkanten (9, 11) zu einem Rohr geformten Metallband (7) gebildet ist. Um einen guten Schutz der optischen Fasern vor Feuchtigkeit und mechanischen Beanspruchungen zu gewährleisten, sind die Bandkanten (9, 11) des Metallbandes (7) in dem sich überlappenden Bereich (13) miteinander verklebt (Fig. 1).

## Beschreibung

Die Erfindung betrifft ein optisches Element oder optisches Kabel mit zumindest einer in einer rohrförmigen Hülle verlaufenden optischen Faser, wobei die rohrförmige Hülle aus einem längslaufenden und mit überlappenden Bandkanten zu einem Rohr geformten Metallband gebildet ist, bzw. ein Verfahren zum Herstellen eines zumindest eine in einer rohrförmigen Hülle verlaufende optische Faser aufweisenden optischen Elements oder optischen Kabels, bei dem ein längslaufendes Metallband um die zumindest eine optische Faser herum mit überlappenden Bandkanten zu einem Rohr geformt wird.

Optische Fasern sind gegenüber mechanischen Einwirkungen sehr empfindlich. So reagieren sie bei Dehnungs-, Biege-und Torsionsbeanspruchungen mit Dämpfungserhöhungen, die zu schlechteren optischen Übertragungseigenschaften führen. Zudem weisen sie eine relativ geringe Bruchdehnung auf. Es ist daher in der Praxis für die meisten Anwendungen erforderlich, die optischen Fasern durch eine Umhüllung vor unzulässig hohen mechanischen Beanspruchungen zu schützen.

So ist es bekannt, einzelne oder mehrere optische Fasern lose mit einer aus einem extrudierten Kunststoff ausgebildeten rohrförmigen Schutzhülle zu umgeben. Die so hergestellte Hohl- oder Bündelader kann mit einer Füllmasse gefüllt sein, die ein Wandern von Wasser oder einer anderen Flüssigkeit innerhalb der Schutzhülle verhindert. Die Extrusion von rohrförmigen Schutzhüllen für optische Fasern ist allerdings vergleichsweise aufwendig und kostenintensiv.

Es ist ebenfalls bekannt, optische Fasern mit einer aus einem Metallband geformten rohrförmigen Schutzhülle zu umschließen, wobei die Bandkanten stumpf aneinander liegen und miteinander verschweißt sind. Solche optischen Elemente mit einer metallenen Schutzhülle eignen sich wegen des guten Schutzes der optischen Fasern insbesondere zur Anordnung in Energiekabeln oder Freileitungsseilen. Für ihre Herstellung ist es erforderlich, daß das Metallband stets exakt die gleiche Bandbreite aufweist, da andernfalls eine dichte Verschweißung des zum Rohr geformten Metallbandes nicht gewährleistet werden kann. Darüber hinaus treten bei der Verschweißung des Metallbandes an seinen Bandkanten in der Praxis häufig Schwierigkeiten auf.

In der DE 42 28 271 A1 ist ein Verfahren zur Herstellung eines optischen Kabels beschrieben, bei dem mindestens eine optische Faser samt Füllmasse in ein zu einem Rohr geformtes Metallband eingeführt wird. Dabei werden die Bandkanten des Metallbandes überlappend aufeinander gelegt, ohne daß sie fest miteinander verbunden werden, und darüber eine Bewehrung und ein Mantel aufgebracht. Eine solche rohrförmige Hülle stellt in vielen Anwendungsfällen keine ausreichend dichte Diffusionssperre dar. Darüber hinaus besteht die Gefahr, daß sich die rohrförmige Hülle unter dem Einfluß äußerer Kräfte verformt und es zu mechanischen Beanspruchungen der in der rohrförmigen Hülle verlaufenden optischen Fasern kommt. Die Verwendung in einem Freileitungsseil oder einem Energiekabel ist daher nicht möglich.

Ausgehend von diesem Stand der Technik liegt der Erfindung das Problem zugrunde, ein einfach und kostengünstig herstellbares optisches Element oder optisches Kabel zu schaffen, bei dem die in diesem verlaufenden optischen Fasern gut vor mechanischen Beanspruchungen und Feuchtigkeit geschützt sind.

Dieses Problem wird durch die Erfindung gelöst, indem die Bandkanten des Metallbandes in dem sich überlappenden Bereich miteinander verklebt sind.

Die durch die Erfindung erzielbaren Vorteile bestehen insbesondere darin, daß die rohrförmige Hülle durch die Verklebung der Bandkanten des Metallbandes einfach und kostengünstig herstellbar ist. Eine exakt gleichbleibende Bandbreite des die Hülle bildenden Metallbandes ist nicht erforderlich, so daß auf ein Zuschneiden der Bandkanten des Metallbandes in der Regel verzichtet werden kann. Durch die Verklebung der überlappenden Bandkanten wird eine diffusionsdichte und stabile Hülle geschaffen, die den Zutritt von Feuchtigkeit in das Innere der rohrförmigen Hülle verhindert und die in der Hülle verlaufenden optischen Fasern gut vor mechanischen Beanspruchungen schützt. Auf diese Weise werden gleichbleibend gute optische Übertragungseigenschaften der optischen Fasern gewährleistet. Ein erfindungsgemäß ausgebildetes optisches Element eignet sich daher auch für die Verwendung in einem Freileitungsseil oder einem Energiekabel.

Durch die in den Unteransprüchen aufgeführten Merkmale sind vorteilhafte Weiterbildungen und Verbesserungen der Erfindung möglich.

Zur einfachen und kostengünstigen Ausbildung eines diffusionsdichten und korrosionsbeständigen optischen Zentraladerkabels ist es vorteilhaft, wenn die rohrförmige Hülle unmittelbar von einem Mantel aus Kunststoff umschlossen ist und die rohrförmige Hülle aus einem aus Aluminium bestehenden Metallband gebildet ist.

Von Vorteil ist es ebenfalls, wenn die rohrförmige Hülle aus einem aus einem Stahl bestehenden Metallband gebildet ist, so daß die rohrförmige Hülle eine hohe Festigkeit aufweist sowie einfach und kostengünstig herstellbar ist.

Durch die Verklebung der sich überlappenden Bandkanten ist es auch ohne Schwierigkeiten möglich, beschichtete Metallbänder zu verwenden, beispielweise ein an seiner Außenseite mit Aluminium beschichtetes Stahlband, das bei der Verwendung des optischen Elements in einem Freileitungsseil eine Kontaktkorrosion zwischen dem Stahl der rohrförmigen Hülle und dem Aluminium oder der Aluminiumlegierung der benachbarten Leiterdrähte verhindert.

Für eine gute und sichere Verklebung der überlappenden Bandkanten des Metallbandes sowie der rohrförmigen Hülle mit darüber liegenden Schichten ist es von Vorteil, wenn das die rohrförmige Hülle bildende Metallband an seiner Außenseite mit einer Klebeschicht versehen ist.

Um eine gute und sichere Verklebung ausschließlich im Bereich der sich überlappenden Bandkanten des Metallbandes zu gewährleisten, ist es vorteilhaft, wenn zumindest eine Bandkante des die rohrförmige Hülle bildenden Metallbandes in dem sich überlappenden Bereich an ihrer der jeweils anderen Bandkante zugewandten Seite mit einer Klebeschicht versehen ist.

Von Vorteil ist es ebenfalls, wenn unmittelbar vor der Formung des Metallbandes zum Rohr ein Schmelzkleber auf das Metallband aufgebracht wird, der für eine sichere Verklebung der sich überlappenden Bandkanten des Metallbandes sorgt.

Ausführungsbeispiele der Erfindung sind in der Zeichnung vereinfacht dargestellt und in der nachfolgenden Beschreibung näher erläutert. Es zeigen die Fig. 1 ein Ausführungsbeispiel eines erfindungsgemäßen optischen Elements, die Fig. 2 ein Ausführungsbeispiel eines erfindungsgemäßen optischen Kabels sowie die Fig. 3 eine Vorrichtung zum erfindungsgemäßen Herstellen eines optischen Elements oder optischen Kabels.

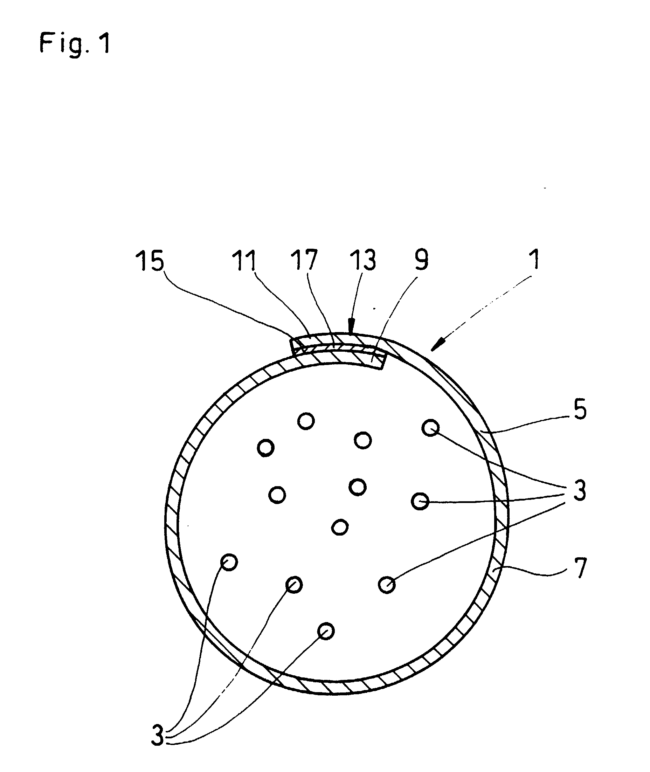

Das in der Fig. 1 beispielhaft dargestellte optische Element 1, das sich insbesondere zur Verwendung in Energiekabeln oder Freileitungsseilen eignet, weist z. B. zwölf optische Fasern 3 auf, die von einer rohrförmigen Hülle 5 umschlossen sind. Die z. B. mit einem thixotropen Gel gefüllte rohrförmige Hülle 5 ist aus einem längslaufenden, beispielsweise aus einem nichtrostenden Edelstahl bestehenden Metallband 7 ausgebildet, das zu einem Rohr geformt ist und dessen Bandkanten 9 und 11 sich in einem Bereich 13 überlappen. Die Bandkante 9 des Metallbandes 7 ist in dem Bereich 13 der Überlappung an ihrer der Bandkante 11 zugewandten Seite 15 mit einer Klebeschicht 17 versehen, die beispielsweise aus einem bereits bei niedrigen Temperaturen aufschmelzbaren Schmelzkleber besteht. Zur Herstellung der rohrförmigen Hülle 5 wird die Klebeschicht 17 beispielsweise nach der Formung des Metallbandes 7 zum Rohr entlang des überlappenden Bereichs 13 kurzzeitig erwärmt und dabei der Schmelzkleber der Klebeschicht 17 in den schmelzflüssigen Zustand gebracht. Die sich überlappenden Bandkanten 9 und 11 werden bis zur Abkühlung des Schmelzklebers aneinander gedrückt, so daß nach dem Aushärten des Schmelzklebers eine feste und dauerhafte Klebeverbindung zwischen den beiden Bandkanten 9 und 11 hergestellt ist. Um in jedem Fall eine feste und diffusionsdichte Klebeverbindung zu gewährleisten, beträgt der Bereich 13 der Überlappung der beiden Bandkanten 9 und 11 vorzugsweise etwa 5 bis 20 % des Umfangs der rohrförmigen Hülle 5.

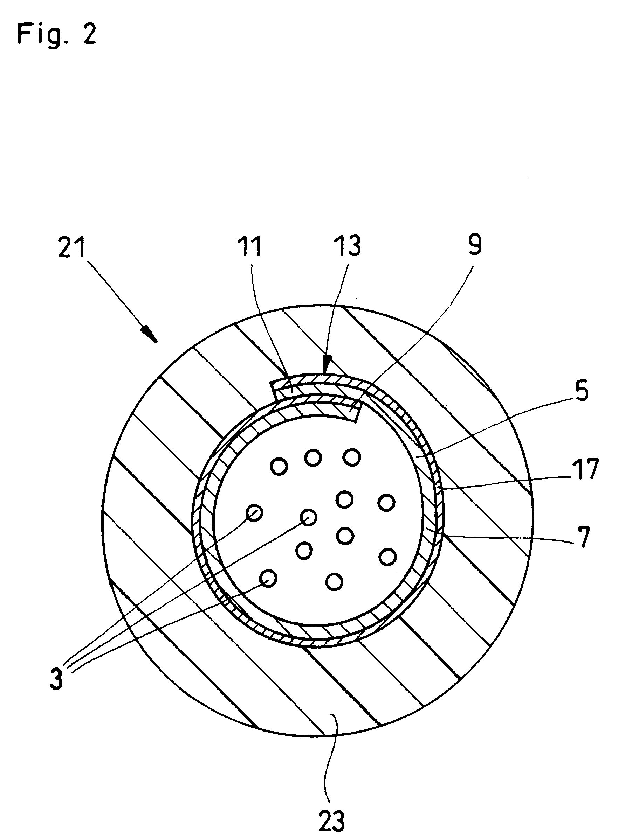

Das in der Fig. 2 beispielhaft dargestellte optische Kabel 21 unterscheidet sich von dem in der Fig. 1 dargestellten optischen Element 1 im wesentlichen dadurch, daß das die rohrförmige Hülle 5 bildende Metallband 7 an seiner Außenseite vollständig mit einer aus einem Schmelzkleber bestehenden Klebeschicht 17 versehen ist. Die rohrförmige Hülle 5 ist beispielsweise unmittelbar von einem Mantel 23 aus Kunststoff umschlossen. Bei der Extrusion des Mantels 23 auf die rohrförmige Hülle 5 wird durch die Extrusionswärme der Schmelzkleber der Klebeschicht 17 in den schmelzflüssigen Zustand gebracht. Bei der anschließenden Abkühlung des optischen Kabels 21 verklebt der Schmelzkleber der Klebeschicht 17 die aneinander anliegenden Bandkanten 9 und 11 des Metallbandes 7 fest und sicher miteinander sowie die durch das Metallband 7 gebildete rohrförmige Hülle 5 mit dem unmittelbar über dieser aufgebrachten Mantel 23.

Das so hergestellte optische Kabel 21 eignet sich insbesondere als Zentraladerkabel, wobei die rohrförmige Hülle 5 gemeinsam mit dem Mantel 23 einen Schichtenmantel bildet. Bei diesem Ausführungsbeispiel besteht das Metallband 7 aus Aluminium und der Mantel 23 aus Polyethylen. Es ist aber beispielsweise ebenfalls möglich, ein Metallband 7 aus einem Stahl zu verwenden.

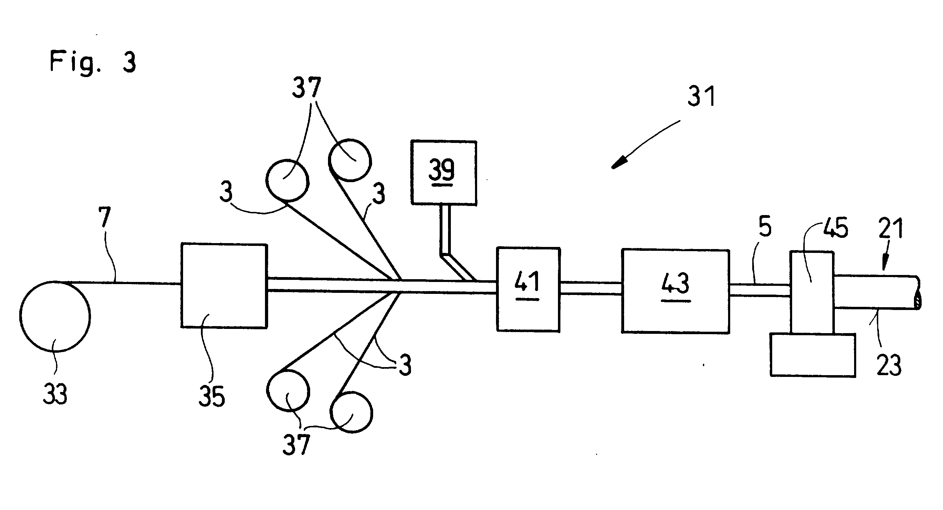

Die Fig. 3 zeigt beispielhaft eine Vorrichtung 31 zum Herstellen eines erfindungsgemäßen optischen Kabels oder Elements. Das Metallband 7 wird von einer Vorratsspule 33 abgezogen und einer ersten Umformeinrichtung 35 zugeführt, in der das Metallband 7 eine etwa U-förmige Gestalt erhält. Nun werden die auf Faserspulen 37 aufgewickelten optischen Fasern 3 sowie eine aus einem Vorratsbehälter 39 entnommene Füllmasse, beispielsweise ein thixotropes Gel, in das U-förmig geformte Metallband 7 eingeführt. Anschließend wird in einer Aufbringeinrichtung 41 ein durch Wärme aufgeschmolzener Schmelzkleber auf das Metallband 7 aufgetragen. Dabei erfolgt der Auftrag des Schmelzklebers beispielsweise nur in dem Bereich, in dem sich die Bandkanten des Metallbandes 7 später überlappen. Unmittelbar anschließend wird mittels einer zweiten Umformeinrichtung 43 das Metallband 7 zum Rohr geformt, wobei die sich überlappenden und aneinander anliegenden Bandkanten des Metallbandes 7 durch den sich abkühlenden und dabei aushärtenden Schmelzkleber fest miteinander verklebt werden. Anschließend wird die so gebildete rohrförmige Hülle 5 mit Hilfe eines Extruders 45 mit einem Mantel 23 aus Kunststoff umschlossen, so daß sich ein zentraladriges optisches Kabel 21 ergibt.

## Patentansprüche

1. Optisches Element oder optisches Kabel mit zumindest einer in einer rohrförmigen Hülle verlaufenden optischen Faser, wobei die rohrförmige Hülle aus einem längslaufenden und mit überlappenden Bandkanten zu einem Rohr geformten Metallband gebildet ist, dadurch gekennzeichnet, daß die Bandkanten (9, 11) des Metallbandes (7) in dem sich überlappenden Bereich (13) miteinander verklebt sind.

2. Optisches Element oder optisches Kabel nach Anspruch 1, dadurch gekennzeichnet, daß die rohrförmige Hülle (5) unmittelbar von einem Mantel (23) aus Kunststoff umschlossen ist.

3. Optisches Element oder optisches Kabel nach Anspruch 1 oder 2, dadurch gekennzeichnet, daß die rohrförmige Hülle (5) aus einem aus Aluminium bestehenden Metallband (7) gebildet ist.

4. Optisches Element oder optisches Kabel nach Anspruch 1 oder 2, dadurch gekennzeichnet, daß die rohrförmige Hülle (5) aus einem aus einem Stahl bestehenden Metallband (7) gebildet ist.

5. Optisches Element oder optisches Kabel nach einem der Ansprüche 1 bis 4, dadurch gekennzeichnet, daß das die rohrförmige Hülle (5) bildende Metallband (7) an seiner Außenseite mit einer Klebeschicht (17) versehen ist.

6. Optisches Element oder optisches Kabel nach einem der Ansprüche 1 bis 4, dadurch gekennzeichnet, daß zumindest eine Bandkante (9) des die rohrförmige Hülle (5) bildenden Metallbandes (7) in dem sich überlappenden Bereich (13) an ihrer der jeweils anderen Bandkante (11) zugewandten Seite (15) mit einer Klebeschicht (17) versehen ist.

7. Optisches Element oder optisches Kabel nach einem der Ansprüche 1 bis 4, dadurch gekennzeichnet, daß unmittelbar vor der Formung des Metallbandes (7) zum Rohr ein Schmelzkleber auf das Metallband (7) aufgebracht ist.

8. Verfahren zum Herstellen eines zumindest eine in einer rohrförmigen Hülle verlaufende optische Faser aufweisenden optischen Elements oder optischen Kabels, bei dem ein längslaufendes Metallband um die zumindest eine optische Faser herum mit überlappenden Bandkanten zu einem Rohr geformt wird, dadurch gekennzeichnet, daß die Bandkanten (9, 11) des Metallbandes (7) in dem sich überlappenden Bereich (13) miteinander verklebt werden.

9. Verfahren nach Anspruch 8, dadurch gekennzeichnet, daß unmittelbar auf die rohrförmige Hülle (5) ein Mantel (23) aus Kunststoff aufgebracht wird.

10. Verfahren nach Anspruch 8 oder 9, dadurch gekennzeichnet, daß die rohrförmige Hülle (5) aus einem aus Aluminium bestehenden Metallband (7) gebildet wird.

11. Verfahren nach Anspruch 8 oder 9, dadurch gekennzeichnet, daß die rohrförmige Hülle (5) aus einem aus einem Stahl bestehenden Metallband (7) gebildet wird.

12. Verfahren nach einem der Ansprüche 8 bis 11, dadurch gekennzeichnet, daß unmittelbar vor der Formung des Metallbandes (7) zum Rohr ein Schmelzkleber auf das Metallband (7) aufgebracht wird.
